# EUROPEAN PATENT SPECIFICATION

(11) **EP 0 413 646 B1**
(45) Date of publication and mention of the grant of the patent: **05.10.1994**
(21) Application number: 90420375.9
(22) Date of filing: 09.08.1990
(51) Int. Cl.: H04N 5/57

(54) **A gain control device for a video monitor**
Vorrichtung zur Verstärkungsregelung eines Videomonitors
Dispositif de commande de gain pour moniteur vidéo

(30) Priority: 18.08.1989 FR 8911141
(43) Date of publication of application: 20.02.1991
(73) Proprietor: HEWLETT-PACKARD FRANCE, F-91040 Evry (FR)
(72) Inventor: Martinelli, René, F-38320 Eybens (FR); Lacroix, Jacques, F-38000 Grenoble (FR)
(74) Representative: Squibbs, Robert Francis

(56) References cited:
- US-A- 3 240 874
- US-A- 3 881 054
- IBM TECHNICAL DISCLOSURE BULLETIN, vol. 25, no. 6, November 1982, pages 2793-2794, New York, US; W.P. MARPLE: "Video gain control"
- PRACTICAL WIRELESS, vol. 54, no. 5, September 1978, pages 24-26; B. DANCE: "TBA120 i.f. amp. limiter demod."

## Description

The present invention relates to the overall architecture of a video monitor and more particularly to its gain control assembly.

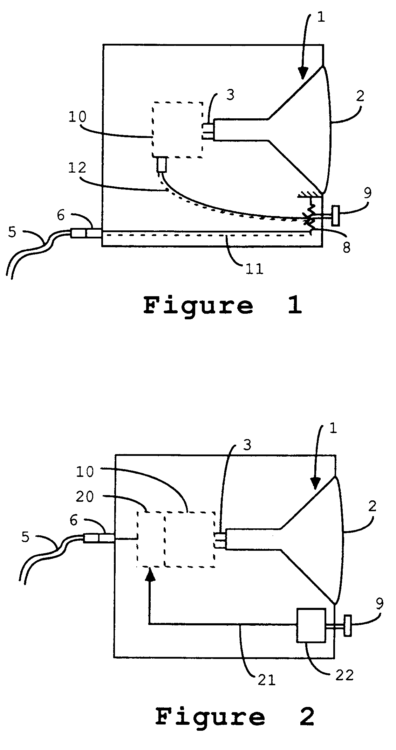

Fig. 1 schematically shows the conventional overall architecture of a video monitor and, more particularly, of the components designed to control the gain of the input video signal. As shown, the video monitor of Fig. 1 comprises a cathode ray tube 1, a screen 2 which corresponds to the front face of the video monitor and a socket 3 which is arranged at the rear face of the video monitor. For ergonomic and aesthetical reasons, it is generally desired to position all the control buttons of the video monitor on its front face and all the input and output signal connectors on its rear face. Thus, a cable 5 leading a video signal to a connector 6 is arranged on the monitor rear face, and this video signal is then routed towards the front face for adjustment by a potentiometer 8 set by a control button 9 and then routed back towards the rear face to a circuit 10 for amplifying and processing of the video signal. Circuit 10 is preferably arranged close to the tube socket. US patent specification US-A-3,240,874 discloses such an arrangement but in relation to television receivers.

Since the video signal in a monitor is a high frequency signal, the spectrum of which is liable to have a value of about a hundred MHz, it is necessary to take steps to avoid parasitic radiations. Thus, between the connector 6 and potentiometer 8, a first portion of coaxial cable 11 is generally provided and, between this potentiometer 8 and circuit 10 a second portion of coaxial cable 12 is also provided. For a monitor screen 2 having a diagonal width of about 30 cm (12 inches), the monitor depth will be on the order of a few tens centimeters. However. using a couple of relatively rigid coaxial cables having a length of several tens centimeters causes several drawbacks:
- they are not easy to connect, which results in high manufacturing cost:
- they are fragile, which adversely affects quality:
- they are liable to generate a relatively high electromagnetic radiation, especially at their terminations: and
- they have to be connected to adapted impedances, which makes it compulsory, for example, for the potentiometer to provide for an intermediate impedance adaptation stage.

Despite those drawbacks, such coaxial cables are provided on practically all monitors for which it is desired to keep the control buttons on the front face.

U.S. patent specification US-A-3,881,054 describes a remote control unit for a video-telephone, the control unit being connected by a four-wire line to the video-telephone and serving to control the brightness and contrast of the received image. By the expedient of adding a "white" pulse to the picture signal of each line, a control method is provided that avoids the need to feed the incoming picture signal to the remote unit; instead, the remote unit feeds d.c. control signals over the four-wire line to the video telephone to control the operation of complex circuitry for adjusting contrast and brightness.

The arrangement proposal in US-A-3,881,054 whilst avoiding the need for long runs of coaxial cable to conveniently placed user-operable video gain controls, is complex in nature and not suitable for high volume production in competitive markets.

It is an object of the present invention to provide a video monitor with a video gain control arrangement that reduces the generated parasitic electromagnetic radiation and is simple and economical to manufacture and is of generally robust form.

According to the present invention there is provided a device for controlling the gain of the input stage for the input signal of a cathode ray tube of a video monitor, the front face of the monitor corresponding to the screen of the tube and having several user-operable controls including a gain control that operates an associated potentiometer disposed in the region of the monitor front face, the rear of the monitor being provided with connectors including a video signal input connector, said rear of the monitor being close to the socket of the tube and to a circuit for processing and amplifying video signals, characterized in that an electronic potentiometer for receiving the video signal and adjusting its amplitude is arranged near the rear of the monitor close to said tube socket, said electronic potentiometer comprising:
- a potential divider chain formed by a resistor in series with a serial arrangement of diodes, the video-signal output of the electronic potentiometer being taken from the junction of the resistor and the serial arrangement of diodes and the video-signal input being fed to the other end of the resistor and
- biasing means for feeding an adjustable d.c. biasing current through the serial arrangement of diodes whereby to vary the dynamic resistance of the latter as a function of the biasing current, the biasing means being controlled by a D.C. signal set by the potentiometer associated with the gain control on the monitor front face such that the biasing current through the diodes is proportional to the D.C. signal set by the potentiometer associated with the gain control.

A detailed description will now be given of preferred embodiments of the invention as illustrated in the accompanying drawings wherein:
- Fig. 1 illustrates the state of the art as above described;
- Fig. 2 shows the arrangement of a video monitor according to the invention;
- Fig. 3 is an exemplary electronic potentiometer according to the invention; and
- Fig. 4 shows in more detail the arrangement of an electronic potentiometer according to the invention.

In the drawings, same reference numerals designate similar or analogous elements.

Fig. 2 shows a monitor comprising a tube 1 with its screen 2 and its socket 3, an input video signal cable 5 arriving on a connector 6, a gain control button 9 on the front face and a circuit 10 for processing and amplifying video signals. According to the invention, an electronic potentiometer circuit 20 permits the gain to be set. This circuit 20 is close to the rear face of the monitor and connector 6 and is also close to the processing and amplifying video signal circuit 10 and the socket 3. Thus, the path of the high frequency video signals is reduced to a minimum length, and consequently, the parasitic high frequency electromagnetic radiations are reduced. The electronic potentiometer 20 is set by a d.c. current signal 21, the intensity of which is determined by a conventional potentiometer 22 actuated by the gain control button 9.

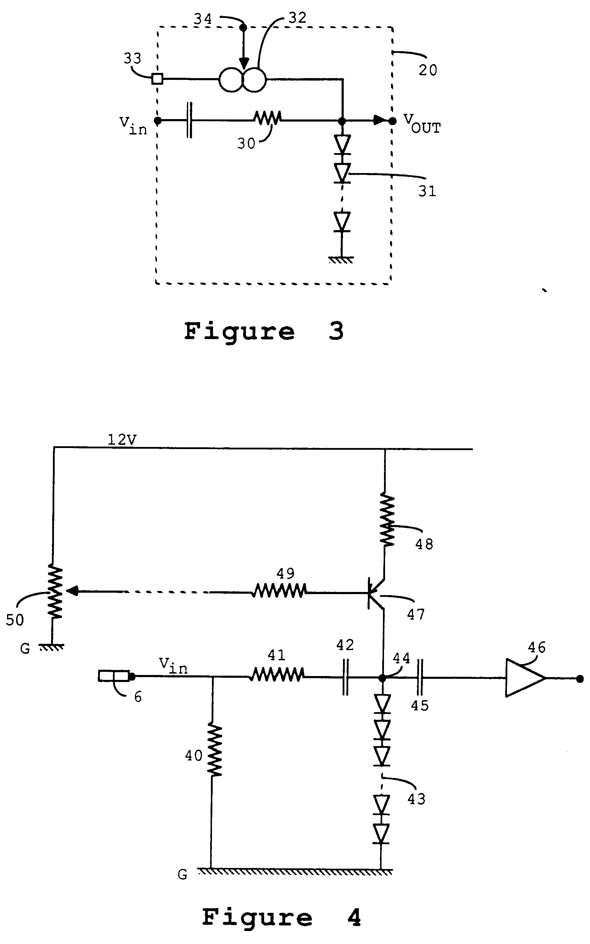

Fig. 3 schematically shows an exemplary electronic potentiometer circuit 20. In this potentiometer, the input video signal Vᵢₙ arrives on a resistor 30 in series with a diode chain 31. The output signal Vₒᵤₜ is drawn at the intersection point between resistor 30 and diode chain 31. A d.c. current is forced to flow in this diode chain from a current source 32 connected to a constant potential 33. This current source is controllable through a control input 34. Thus, when the current source intensity varies, the forward dynamic resistance of the diodes varies together with their biasing current. Moreover, it will be noted that this variation is quasi-linear within a given intensity range. The number of diodes will be chosen so that the circuit intensity is within this linear region.

Fig. 4 represents in more detail an embodiment of the electronic potentiometer and its adjustable current source. The video signal Vᵢₙ arrives on connector 6.A first resistor 40 is connected between this input and ground G. In addition, signal Vᵢₙ arrives on a resistor 41 constituting the first leg of a potentiometer for the a.c. current in series with a capacitor 42 and a diode chain 43 forming the second leg of the a.c. potentiometer. The node 44 between the capacitor 42 and the diode chain 43 is coupled through a capacitor 45 to the input of the video signal amplifying and processing circuit 46 for supplying a signal on the cathode terminal of the tube socket. On the other hand, the node 44 is connected through a transistor 47 and a resistor 48 to a d.c. power supply, for example 12 volts. Thus, the d.c. current flowing through the diode chain 43 and therefore the equivalent resistor of diode chain 43 depend upon the d.c. voltage applied on the base of transistor 47. This base is connected through a resistor 49 to the cursor of a potentiometer 50, arranged on the front face of the monitor so that the cursor position may be set by the gain control button 9 (Fig. 2).

Of course, the invention may have numerous variants and adaptations which will clearly appear to those skilled in the art who will be able to choose other implementations.

## Claims

1. A device for controlling the gain of the input stage for the input video signal of a cathode ray tube (1) of a video monitor, the front face of the monitor corresponding to the screen (2) of the tube and having several user-operable controls (9) including a gain control that operates an associated potentiometer (22, 50) disposed in the region of the monitor front face, the rear of the monitor being provided with connectors including a video signal input connector (6), said rear of the monitor being close to the socket (3) of the tube and to a circuit (10) for processing and amplifying video signals, characterized in that an electronic potentiometer (20) for receiving the video signal and adjusting its amplitude is arranged near the rear of the monitor close to said tube socket, said electronic potentiometer comprising:
- a potential divider chain formed by a resistor (41) in series with a serial arrangement of diodes (43), the video-signal output of the electronic potentiometer being taken from the junction (44) of the resistor (41) and the serial arrangement of diodes (43) and the video-signal input being fed to the other end of the resistor (41), and
- biasing means (47-49) for feeding an adjustable d.c. biasing current through the serial arrangement of diodes (43) whereby to vary the dynamic resistance of the latter as a function of the biasing current, the biasing means (47-49) being controlled by a D.C. signal set by the potentiometer (22, 50) associated with the gain control on the monitor front face such that the biasing current through the diodes is proportional to the D.C. signal set by the potentiometer associated with the gain control.

## Patentansprüche

1. Vorrichtung zum Steuern der Verstärkung der Eingangsstufe für das Eingangsvideosignal (oF) einer Kathodenstrahlröhre eines Videomonitors, wobei die Vorderseite des Monitors dem Bildschirm (2) der Röhre entspricht und mehrere vom Benutzer bedienbare Steuerungen (9) einschließlich einer Verstärkungssteuerung, die ein dazugehöriges Potentiometer (22, 50), das im Bereich der Monitorvorderseite angeordnet ist, betreibt, aufweist, wobei die Rückseite des Monitors mit Verbindern, die einen Videosignaleingangsverbinder (6) einschließen, vorgesehen ist, wobei die Rückseite des Monitors in der Nähe der Fassung (3) der Röhre und einer Schaltung (10) zum Verarbeiten und Verstärken von Videosignalen liegt, dadurch gekennzeichnet, daß ein elektronisches Potentiometer (20) zum Empfangen des Videosignals und zum Einstellen seiner Amplitude in der Nähe der Rückseite des Monitors nahe der Röhrenfassung angeordnet ist, wobei das elektronische Potentiometer folgende Merkmale aufweist:
eine Potentialteilerkette, die von einem Widerstand (41) in Serie mit einer seriellen Anordnung von Dioden (43) gebildet ist, wobei die Videosignalausgabe des elektronischen Potentiometers vom Verbindungspunkt (44) des Widerstands (41) und der seriellen Anordnung der Dioden (43) entnommen wird, und die Videosignaleingabe zum anderen Anschluß des Widerstandes (41) geführt wird, und
eine Vorspannungseinrichtung (47 - 49) zum Führen eines einstellbaren Gleichsignal-Vorspannungsstroms durch die serielle Anordnung der Dioden (43), um dadurch den dynamischen Widerstand der letzteren als eine Funktion des Vorspannungsstroms zu variieren, wobei die Vorspannungseinrichtung (47 - 49) durch ein Gleichsignal, das durch das Potentiometer (22, 50), das der Verstärkungssteüerung auf der Monitorvorderseite zugeordnet ist, eingestellt wird, derart gesteuert wird, daß der Vorspannungsstrom durch die Dioden proportional zu dem Gleichsignal ist, das durch das Potentiometer, das der Verstärkungssteuerung zugeordnet ist, eingestellt ist.

## Revendications

1. Dispositif de commande du gain de l'étage d'entrée de signal vidéo d'un tube à rayons cathodiques (1) de moniteur vidéo, la face avant du moniteur correspondant à l'écaan (2) du tube et comportant diverses commandes actionnables par l'utilisateur (9) incluant une commande de réglage de gain qui actionne un potentiomètre associé (22, 50) disposé au voisinage de la face avant du moniteur, la face arrière du moniteur comprenant des connecteurs dont un connecteur (6) d'entrée du signal vidéo, oette face arrière du moniteur étant voisine du connecteur (3) du tube et d'un circuit (10) de traitement et d'amplification des signaux vidéo, caractérisé en ce qu'un potentiomètre électronique (20) recevant le signal vidéo et réglant son amplitude est disposé au voisinage de la face arrière du moniteur près dudit connecteur du tube, ce potentiomètre électronique comprenant :
- une chaîne diviseur de potentiel constituée d'une résistance (41) en série avec un agencement série de diodes (43), la sortie de signal vidéo du potentiomètre électronique étant prise à partir du point de raccordement (44) de la résistance (41) et de l'agencement en série de diodes (43) et l'entrée de signal vidéo étant fournie à l'autre borne de la résistance (41), et
- des moyens de polarisation (47-49) pour fournir un courant continu de polarisation réglable à l'agencement série de diodes (43) pour modifier ainsi la résistance dynamique de ce dernier en fonction du courant de polarisation, les moyens de polarisation (47-49) étant commandes par un signal continu établi par le potentiomètre (22, 50) associé à la commande de gain sur la face avant du moniteur de sorte que le courant de polarisation à travers les diodes est proportionnel au signal continu fixé par le potentiomètre associé à la commande de gain.
